# EUROPEAN PATENT APPLICATION

(11) **EP 4 510 305 A1**
(43) Date of publication of application: **19.02.2025**
(21) Application number: 23191561.2
(22) Date of filing: 15.08.2023
(51) Int. Cl.: H01M 10/613, H01M 10/625, H01M 10/653, H01M 10/6554, H01M 10/6555, H01M 10/658, H01M 50/209, H01M 50/291, H01M 50/293, H01M 10/0525

(54) **THERMAL BARRIER WITH DEFORMABLE SPACER ASSEMBLY**

(71) Applicant: Newfrey LLC, New Britain, CT 06053 (US)
(72) Inventor: AKBARINIA, Alireza, 35394 Gießen (DE)
(74) Representative: SBD IPAdmin

(57) **Abstract**

A thermal barrier for use in a battery module includes a barrier plate assembly configured to be positioned between a first battery cell and a second battery cell. The barrier plate assembly comprises one or more barrier plates configured to prevent or limit the transfer of heat between the first battery cell and the second battery cell. The thermal barrier also includes a deformable spacer assembly comprising one or more deformable spacer elements. A force exerted by the first battery cell and/or the second battery cell on the thermal barrier is configured to be transmitted through the deformable spacer assembly. The thermal barrier can be used in various battery modules to improve thermal management and safety.

## Description

### FIELD

The technology relates to the field of battery modules, specifically focusing on thermal management and heat dissipation between adjacent battery cells in battery packs used in various applications, such as electric vehicles and energy storage systems.

### BACKGROUND

Battery technology, particularly lithium-ion batteries, has become increasingly important in various applications, such as electric vehicles, portable electronic devices, and renewable energy storage systems. One of the critical aspects of battery technology is the thermal management and safety of the battery cells, especially in high-energy-density applications like electric vehicles.

In the present context, the terms "battery cell", "battery module", "battery section", and "battery pack" (as well as their shortened variants "cell", "module", "section", and "pack") are used to describe different levels of components of an overall battery assembly. For example, numerous individual battery cells form the building blocks of battery modules. Multiple battery modules (in conjunction with ancillary equipment) in turn make up a battery pack.

For purposes of this application, a cell is the smallest unit of a battery pack that includes a single anode electrical connection and single cathode electrical connection on the exterior or a sealed housing that contains one or more pairs of anode and cathode elements. A cell is a single electrochemical unit, whereas a battery is made up of one or more electrically interconnected cells joined in series, parallel or both, depending on desired output voltage, current or capacity.

A battery apparatus may include one or more battery packs suitably sized to provide electrical power to the vehicle. Battery packs are made up of battery sections which may be made up of numerous battery modules each of which is in turn made up of one or more battery cells that deliver electrical current to a load. The battery cells are electrically interconnected.

Battery packs are made up of sections which may be made up of numerous battery modules each of which is in turn made up of one or more battery cells that deliver electrical current to a load. The number of battery cells within the larger battery module, section, pack or related structure will be appreciated by those skilled in the art to coincide with the power needs of the device receiving electric current from the battery, as well as the thermal operating requirements of the cells within the battery. In such batteries, current flow, both charge and discharge, generates heat inside the cells and in their interconnection systems.

Electric Vehicles (EVs) use lithium-ion batteries comprised of cells. The performance of a lithium-ion battery cell is very dependent on its temperature. When overheated, the cells can experience degraded electrical performance, damage, and reduced lifespan. Thus, lithium-ion batteries require thermal management systems to maintain a constant temperature with very low temperature deviations (the temperature distribution over a cell should be uniform with a maximum deviation of less than 5°C) so that they can operate efficiently without damages or failures.

Additionally, lithium-ion batteries may experience a failure called thermal runaway. The term thermal runaway event refers to an uncontrolled increase in temperature in a battery system. Thermal runaway is a chain reaction within a battery cell that can be very difficult to stop once it has started. It occurs when the temperature inside a battery reaches the point that causes a chemical reaction to occur inside the battery. This chemical reaction produces even more heat, which drives the temperature higher, causing further chemical reactions that create more heat. During a thermal runaway event, the generation of heat within a battery system or a battery cell exceeds the dissipation of heat, thus leading to a further increase in temperature. A thermal runaway event may be triggered by various conditions, including a short circuit within the cell, improper cell use, physical abuse, manufacturing defects, or exposure of the cell to extreme external temperatures.

Accordingly, one of the important issues in the construction of an electric vehicle is the thermal management and thermal safety systems of the battery (notably lithium-ion batteries have been widely used in electric vehicles). Thermal management is essential for the performance and operating life of electric vehicle batteries and several studies, disclosures, and patent documents deal with this issue.

In a battery module, multiple battery cells are typically arranged in close proximity to each other, which can lead to heat generation and accumulation during operation. This heat can cause a rise in temperature, which may lead to a decrease in battery performance, capacity, and lifespan. In extreme cases, excessive heat can cause thermal runaway, leading to catastrophic failure and potential safety hazards.

To address these issues, various thermal management systems have been developed to regulate the temperature of battery cells and prevent excessive heat build-up. One common approach is to use thermal barriers between adjacent battery cells to limit the transfer of heat between them. These thermal barriers are typically made of materials with low thermal conductivity, such as mica, aerogel, or silicon rubber, to provide thermal insulation.

However, during the charging process, battery cells, particularly those of the prismatic format, can experience swelling, which occurs mainly on the two lateral planar opposite faces of the cell casing. This swelling can increase the total size, and in particular the thickness of the battery, causing pressure forces on the thermal barriers and adjacent components. To mitigate this issue, spacers are often used between the cells to accommodate the swelling. However, the pressure exerted on the spacers can cause damage to the thermal barriers, compromising their effectiveness and potentially leading to safety concerns.

Prior art solutions, such as those disclosed in JP2009163932 and JP2020072005A, have attempted to address these issues by using heat insulating cushioning members or heat transfer suppressing sheets between battery cells. However, these solutions may not adequately address the problems associated with cell swelling and the potential damage to thermal barriers during charging.

Therefore, there is a need for an improved thermal management system that can effectively address the issues of cell swelling and potential damage to thermal barriers while maintaining the desired thermal insulation and safety properties.

### SUMMARY

According to a first aspect of the disclosure, a thermal barrier is provided for use in a battery module. The thermal barrier comprises a barrier plate assembly configured to be positioned between a first battery cell and a second battery cell. The barrier plate assembly includes one or more barrier plates designed to prevent or limit the transfer of heat between the first battery cell and the second battery cell. The thermal barrier also includes a deformable spacer assembly comprising one or more deformable spacer elements extending from a first side of the thermal barrier adjacent to the first battery cell to a second side of the thermal barrier adjacent to the second battery cell. A force exerted by the first battery cell and/or the second battery cell on the thermal barrier is configured to be transmitted through the deformable spacer assembly. This aspect of the disclosure provides an advantage of effectively managing heat transfer between adjacent battery cells, ensuring optimal performance and temperature regulation.

Optionally in some examples, the one or more deformable spacer elements are configured to deform when the first battery cell and/or the second battery cell exert a force on the thermal barrier. This provides an advantage of allowing the thermal barrier to adapt to changes in the size or shape of the battery cells, ensuring a consistent level of thermal insulation.

Optionally in some examples, the deformable spacer assembly is configured to return to its original shape once the first battery cell and/or the second battery cell do not exert a force on the thermal barrier. This provides an advantage of maintaining the structural integrity of the thermal barrier over time, ensuring consistent performance and durability.

Optionally in some examples, the one or more deformable spacer elements are configured to deform into one or more thermal barrier voids within the thermal barrier when a force is exerted by the first battery cell and/or the second battery cell on the thermal barrier. This provides an advantage of further enhancing the adaptability of the thermal barrier to changes in the size or shape of the battery cells.

Optionally in some examples, the deformable spacer assembly is configured to define one or more thermal barrier voids within the thermal barrier. This provides an advantage of creating additional space within the thermal barrier for the deformable spacer elements to expand into, ensuring optimal performance and adaptability.

Optionally in some examples, the one or more deformable spacer elements are made from one or more materials such as silicon rubber, aerogel, rubber, polyurethane, thermoplastic elastomer, polyethylene foam, neoprene rubber, and/or latex foam. This provides an advantage of offering a range of material options for the deformable spacer elements, allowing for customization of the thermal barrier based on specific requirements or preferences.

Optionally in some examples, the one or more deformable spacer elements have a thermal conductivity of less than 0.1 W/mK. This provides an advantage of ensuring that the deformable spacer elements effectively minimise heat transfer between adjacent battery cells.

Optionally in some examples, the barrier plate assembly comprises a first barrier plate, a second barrier plate, and a third barrier plate. This provides an advantage of offering a modular and customizable design for the barrier plate assembly, allowing for adaptation to various battery module configurations.

Optionally in some examples, each of the first barrier plate, the second barrier plate, and the third barrier plate comprises a first barrier layer, a second barrier layer, and a barrier spacer positioned between the first barrier layer and the second barrier layer. This provides an advantage of further enhancing the thermal insulation capabilities of the barrier plate assembly.

Optionally in some examples, the first barrier layer and the second barrier layer are made from one or more materials such as mica, aerogel, paper, silicon rubber, ceramic, fibreglass, phenolic resin, and/or polyimide. This provides an advantage of offering a range of material options for the barrier layers, allowing for customization of the thermal barrier based on specific requirements or preferences.

Optionally in some examples, the thermal barrier further comprises a first contact layer adjacent to the first battery cell and a second contact layer adjacent to the second battery cell. This provides an advantage of further enhancing the thermal insulation capabilities of the thermal barrier.

Optionally in some examples, the first contact layer and the second contact layer are made from one or more materials such as mica, aerogel, paper, silicon rubber, ceramic, fibreglass, phenolic resin, polyimide, aluminium, copper, graphite, carbon nanotubes, graphene, and/or gold. This provides an advantage of offering a range of material options for the contact layers, allowing for customization of the thermal barrier based on specific requirements or preferences.

Optionally in some examples, the thermal barrier further comprises a packaging layer surrounding the thermal barrier, the packaging layer being made from an electrically insulating material. This provides an advantage of electrically insulating the thermal barrier from the first battery cell and the second battery cell, ensuring safe operation and preventing electrical shorts.

Optionally in some examples, the one or more deformable spacer elements have a hardness range of 20 Shore A to 60 Shore A according to the standard ASTM D 2240. This provides an advantage of ensuring that the deformable spacer elements have an appropriate level of hardness for effective performance and durability.

According to a second aspect of the disclosure, a battery sub-assembly is provided, comprising a first battery cell, a second battery cell, and a thermal barrier positioned between the first battery cell and the second battery cell. The thermal barrier is designed according to any one of the aspects described above.

According to a third aspect of the disclosure, a battery module is provided, comprising a plurality of battery sub-assemblies as described in the second aspect. This provides an advantage of creating a modular and customizable battery module design, allowing for adaptation to various applications and requirements.

### BRIEF DESCRIPTION OF THE DRAWINGS

Examples are described in more detail below with reference to the appended drawings.
Figure 1 is a perspective exploded diagram of a thermal barrier according to an example;
Figure 2 is a cross-sectional view of the thermal barrier according to an example;
Figure 3 is another cross-sectional view of the thermal barrier according to an example;
Figure 4a and 4b are cross-sectional views of the thermal barrier according to an example;
Figure 5a and 5b show a cross-sectional view of the thermal barrier according to an example when the adjacent cells have expanded;
Figure 6 is a cross-sectional view of the thermal barrier according to an example;
Figures 7a to 7e show cross-sectional views of a deformable separating element according to an example;
Figures 8a to 8i show cross-sectional views of part of the thermal barrier according to various examples;
Figures 9a and 9b respectively show a cross-sectional side view and a plan view of a barrier layer of the thermal barrier according to an example; and
Figures 10a to 10i show cross-sectional views of the thermal barrier according to an example.

### DETAILED DESCRIPTION

The detailed description set forth below provides information and examples of the disclosed technology with sufficient detail to enable those skilled in the art to practise the disclosure.

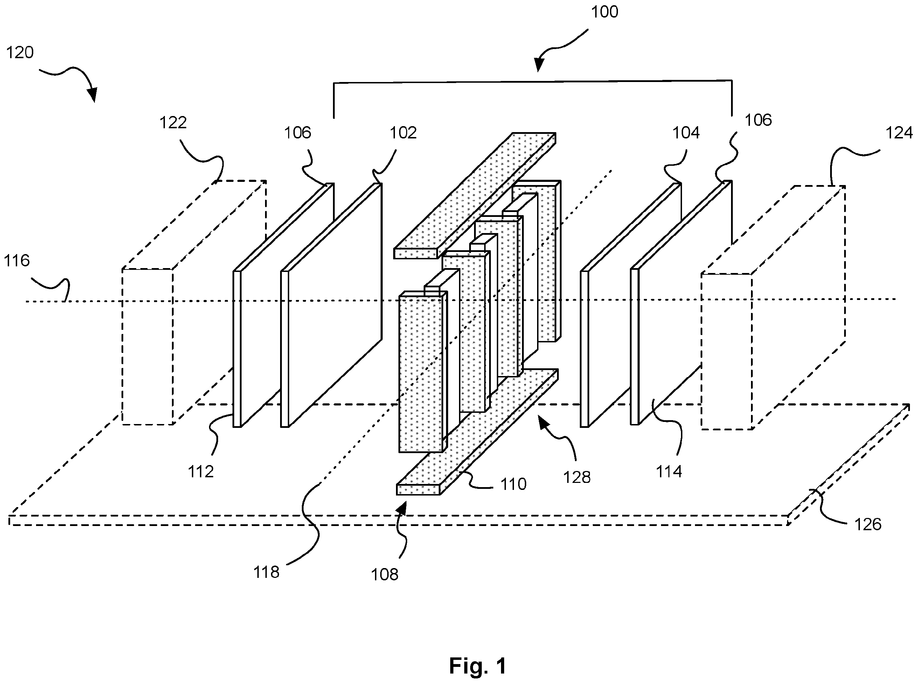

Figure 1 shows a perspective exploded diagram of a thermal barrier 100 according to an example. The thermal barrier 100 includes a barrier plate assembly 128, a deformable spacer assembly 108, a first contact layer 102, a second contact layer 104, and a packaging layer 106.

In one example, a battery sub-assembly 120 comprises a first battery cell 122, a second battery cell 124, and a thermal barrier 100 positioned between the first battery cell 122 and the second battery cell 124. The integration of the thermal barrier 100 in the battery sub-assembly 120 provides several advantages. For instance, the thermal barrier 100 prevents or limits the transfer of heat between the first battery cell 122 and the second battery cell 124, ensuring optimal performance and temperature regulation. The thermal barrier 100 as described with reference to the Figures further provides the advantage of compensating for the swelling of the first battery cell 122 and / or the second battery cell 124 during charging cycles. The swelling compensation provided by the thermal barrier 100 will be discussed in further detail below.

Optionally, the battery sub-assembly 120 may comprise additional components, such as a bottom plate 126 with a thermal pad made from a thermal interface material (TIM). The first battery cell 122, the second battery cell 124, and the thermal barrier 100 may be mounted on the bottom plate 126, providing additional support and thermal management.

In some examples, a battery module (not shown) comprises a plurality of battery sub-assemblies 120, each including a thermal barrier 100 according to the configurations described with reference to Figures. The battery module and the battery sub-assembly 120 may be designed to accommodate various types of battery cells, such as prismatic cells, cylindrical cells, pouch cells, solid-state cells, lithium-ion cells, or blade cells.

Optionally, the battery module may include additional components or features to enhance its performance, such as cooling systems, temperature sensors, or monitoring systems. These optional components may be integrated with the battery sub-assemblies 120 and the thermal barriers 100 to provide a comprehensive solution for thermal management and performance optimization in battery modules.

The use of multiple battery sub-assemblies 120 in a battery module provides several advantages. For example, the thermal barriers 100 between adjacent battery sub-assemblies 120 help to prevent or limit the transfer of heat between the battery cells, ensuring optimal performance and temperature regulation across the entire battery module whilst also compensating for battery cell swelling during charging cycles.

In some examples, as shown in Figure 1, the thermal barrier 100 may include a barrier plate assembly 128, a deformable spacer assembly 108, a first contact layer 102, a second contact layer 104, and a packaging layer 106.

In some examples, the thermal barrier 100 extends in a plane parallel with the first thermal barrier axis 116 as shown in Figure 1. The thermal barrier 100 extends between the first battery cell 122 and the second battery cell 124 in a direction along the second thermal barrier axis 118. The first thermal barrier axis 116 is perpendicular to the second thermal barrier axis 118.

Hereinafter the dimension "thickness" is used in reference to one or more components of the thermal barrier 100. The thickness dimension refers to the size of the component in a direction parallel with the second thermal barrier axis 118. Furthermore, the dimensions "height" and "length" are also used in reference to one or more components of the thermal barrier 100. The dimensions "height" and "length" are in a plane parallel with the first thermal barrier axis 116. The dimensions "height" and "length" are themselves perpendicular to each other.

As mentioned above, the thermal barrier 100 extends between a first battery cell 122 and a second battery cell 124. In one example, the thermal barrier 100 includes a first thermal barrier engaging surface 112, which is adjacent to the first battery cell 122, and a second thermal barrier engaging surface 114, which is adjacent to the second battery cell 124. These engaging surfaces can refer to a surface of any component of the thermal barrier 100 that is adjacent to the first battery cell 122 and the second battery cell 124.

As shown in Figure 1, the external surface of the thermal barrier 100 is optionally a packaging layer 106. In other words, the first thermal barrier engaging surface 112, and the second thermal barrier engaging surface 114 are the packaging layer 106.

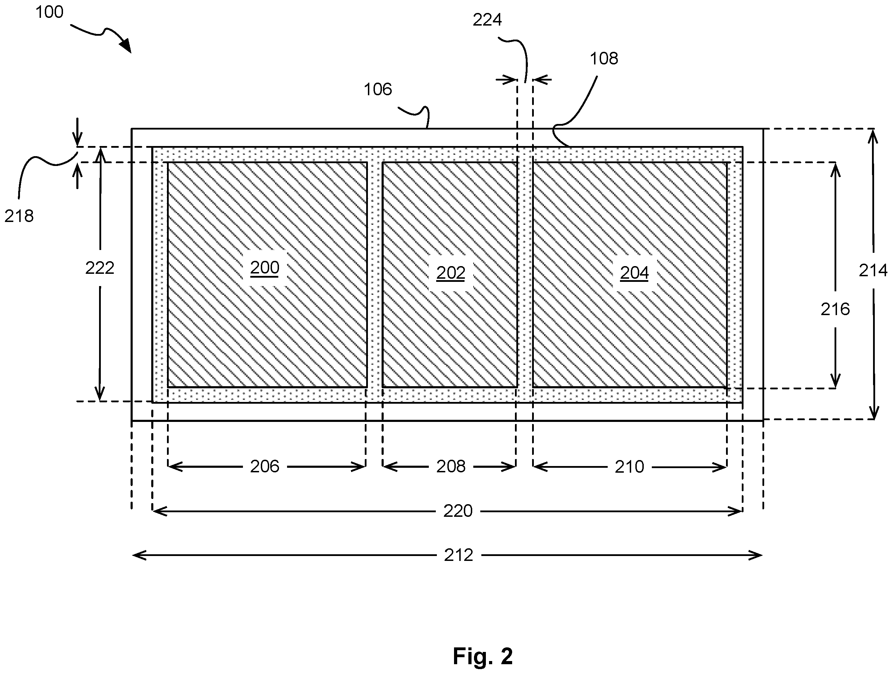

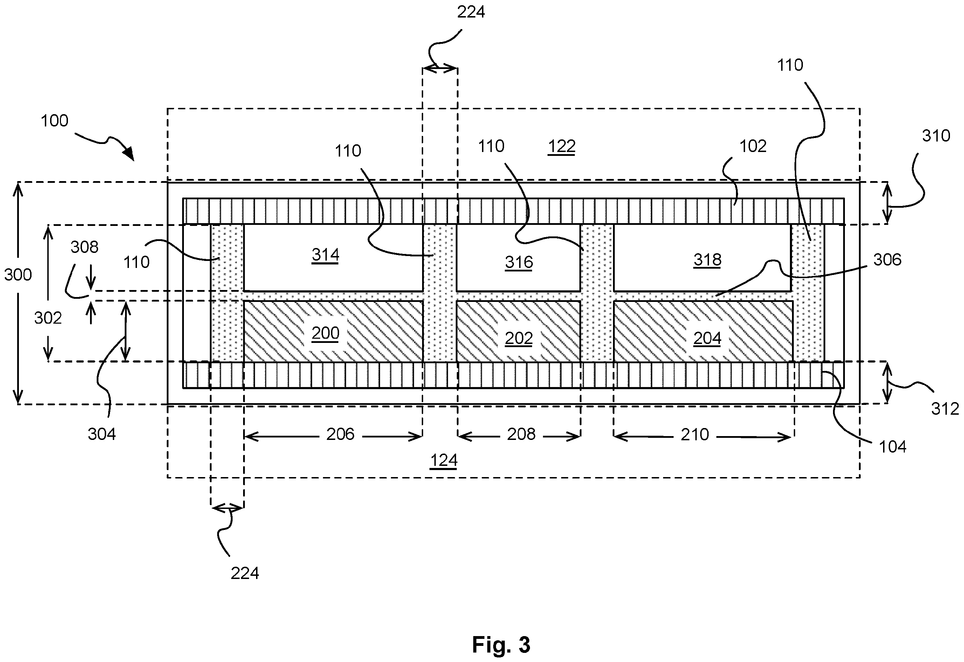

In some examples, the thermal barrier 100 may comprise a packaging layer 106 that surrounds the entire thermal barrier 100 (as shown in Figure 2 and Figure 3). Optionally the packaging layer 106 surrounds only part of the thermal barrier 100. The packaging layer 106 is configured to electrically insulate the thermal barrier 100 from the first battery cell 122 and the second battery cell 124. This ensures that the thermal barrier 100 does not interfere with the electrical performance of the first or second battery cells 122, 124 and prevents any potential short circuits or other electrical issues.

In one example, the packaging layer 106 is made from an electrically insulating material. This material should be capable of withstanding the high temperatures and harsh environments typically encountered in battery modules. Examples of suitable electrically insulating materials for the packaging layer 106 include paper, plastic wrap, plastic film, epoxy resin, glass fibre reinforced plastic (GFRP), silicone rubber, PVC (Polyvinyl chloride), and Mylar (Polyethylene terephthalate). The use of these materials ensures that the thermal barrier 100 remains electrically isolated from the first and second battery cells 122, 124, maintaining the safety and performance of the battery module.

In one example, as shown in Figure 1, the thermal barrier 100 optionally includes a first contact layer 102 and a second contact layer 104. The first contact layer 102 is positioned adjacent to the first battery cell 122, while the second contact layer 104 is positioned adjacent to the second battery cell 124. These contact layers may provide additional thermal insulation or efficient heat transfer between the battery cells and the thermal barrier 100, depending on the materials used.

In some examples, the first contact layer 102 and the second contact layer 104 are made from high temperature resistance and low thermal conductive materials. These materials can withstand high temperatures while minimising the transfer of heat between adjacent cells or subassemblies. Examples of such materials include mica, aerogel, paper, silicon rubber, ceramic, fibreglass, phenolic resin, and polyimide. The use of these materials provides thermal insulation, ensuring that heat is retained or dissipated as desired.

In other examples, the first contact layer 102 and the second contact layer 104 are made from high temperature resistance and high thermal conductive materials. These materials can withstand high temperatures while also efficiently conducting and transferring heat. Examples of such materials include aluminium, copper, graphite, carbon nanotubes, graphene, and gold. The use of these materials allows for efficient transfer of heat between adjacent cells or subassemblies, ensuring optimal performance and temperature regulation.

In some examples, the packaging layer 106 and first contact layer 102 has a first contact layer thickness 310 of 0.1mm to 1mm, while the packaging layer 106 and second contact layer 104 has a second contact layer thickness 312 of 0.1 mm to 1 mm. However, the dimensions of the contact layers 102, 104 and the packaging layer 106 can be adjusted depending on the specific requirements of the battery module and the battery cells used.

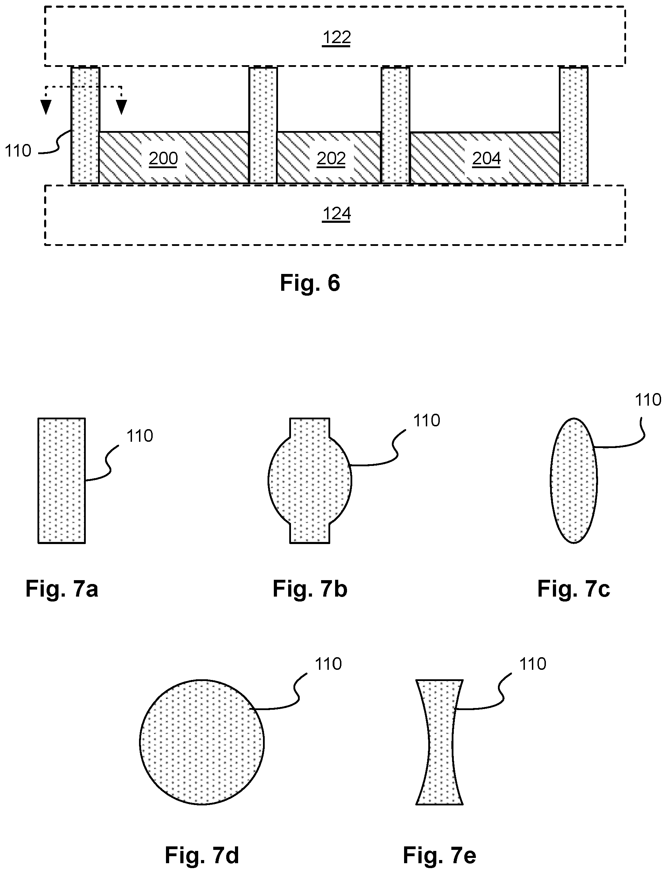

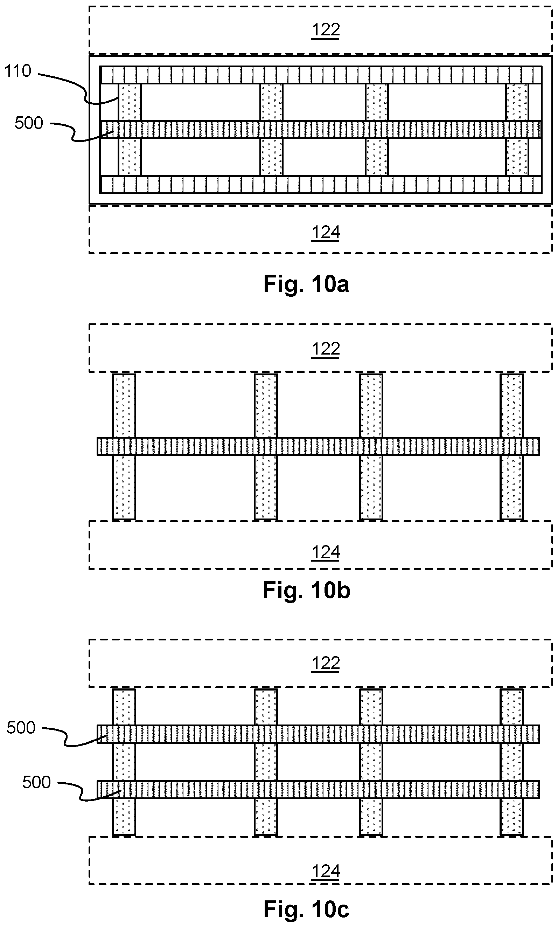

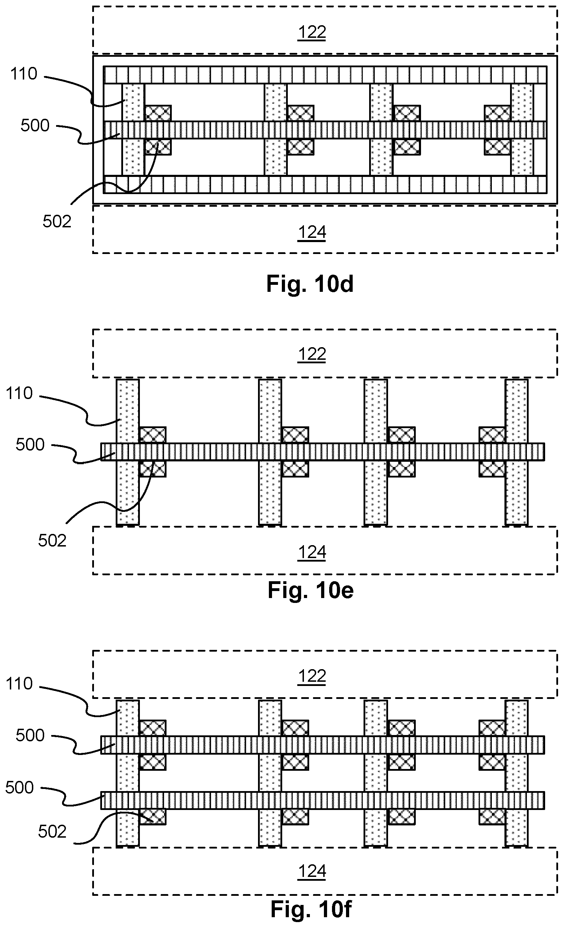

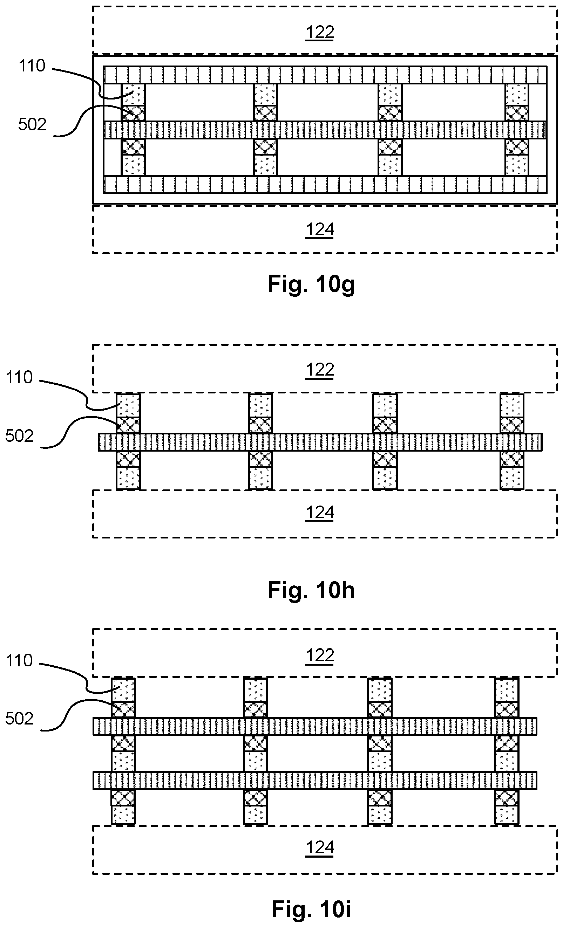

In some examples, the first contact layer 102, the second contact layer 104 and the packaging layer 106 are optional and are not provided (e.g., see Figures 6, 10b, 10c, 10e, 10f, 10h and 10i).

Figure 2 shows a cross-sectional view of the thermal barrier 100 according to an example. The cross-sectional view of the thermal barrier 100 as shown in Figure 2 is in the direction of the first thermal barrier axis 116. For the purposes of clarity, the first contact layer 102, the second contact layer 104 are not shown.

Figure 3 shows another cross-sectional view of the thermal barrier 100 according to an example. Figure 3 is a cross-sectional view of the thermal barrier 100 in the direction of the second thermal barrier axis 118 from the top of the thermal barrier 100. Figure 3 also does not show the packaging layer 106 on the top of the thermal barrier 100 for the purposes of clarity.

In one example as shown in Figures 2 and 3, the thermal barrier 100 has a thermal barrier thickness 300 of 5.5mm, a thermal barrier width 214 of 100mm, and a thermal barrier length 212 of 250mm. These dimensions are exemplary and the thermal barrier 100 can have any suitable dimensions for the thermal barrier thickness 300, the thermal barrier width 214, and the thermal barrier length 212. The thickness, width, and length of the thermal barrier 100 can be adjusted depending on the specific requirements of the battery module and the battery cells used.

As shown in Figures 2 and 3, the barrier plate assembly 128 is positioned between the first battery cell 122 and the second battery cell 124. The barrier plate assembly 128 will now be discussed in more detail.

The barrier plate assembly 128 may comprise a first barrier plate 200, a second barrier plate 202, and a third barrier plate 204. The deformable spacer assembly 108 may comprise one or more deformable spacer elements 110.

In one example, the thermal barrier 100 comprises a barrier plate assembly 128 configured to be positioned between a first battery cell 122 and a second battery cell 124. The barrier plate assembly 128 is configured to prevent or limit the transfer of heat between the first battery cell 122 and the second battery cell 124, ensuring optimal performance and temperature regulation of the battery cells. The barrier plate assembly 128 may comprise one or more barrier plates 200, 202, 204, such as a first barrier plate 200, a second barrier plate 202, and a third barrier plate 204. Each of these barrier plates 200, 202, 204 may have a specific structure and properties that contribute to the overall thermal insulation and heat transfer capabilities of the thermal barrier 100.

As shown in Figures 1, 2 and 3, the plurality of barrier plates 200, 202, 204 are positioned side by side and are aligned in a plane parallel with the second thermal barrier axis 118.

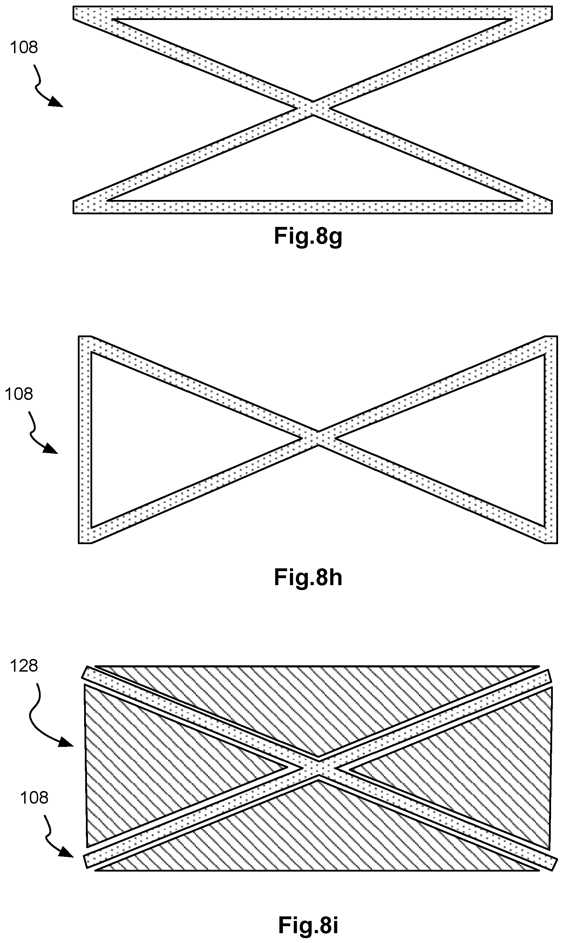

Whilst Figures 1, 2, 3 show three barrier plates 200, 202, 204 in the barrier plate assembly 128, there can be any suitable number of separate barrier plates 200, 202, 204. Indeed, in some examples there can be a single barrier plate 200. Alternatively, there can be other number of barrier plates 200, 202, 204 e.g., 4, 5, 6 etc. For example, Figure 8i shows an example with four barrier plates 200, 202, 204.

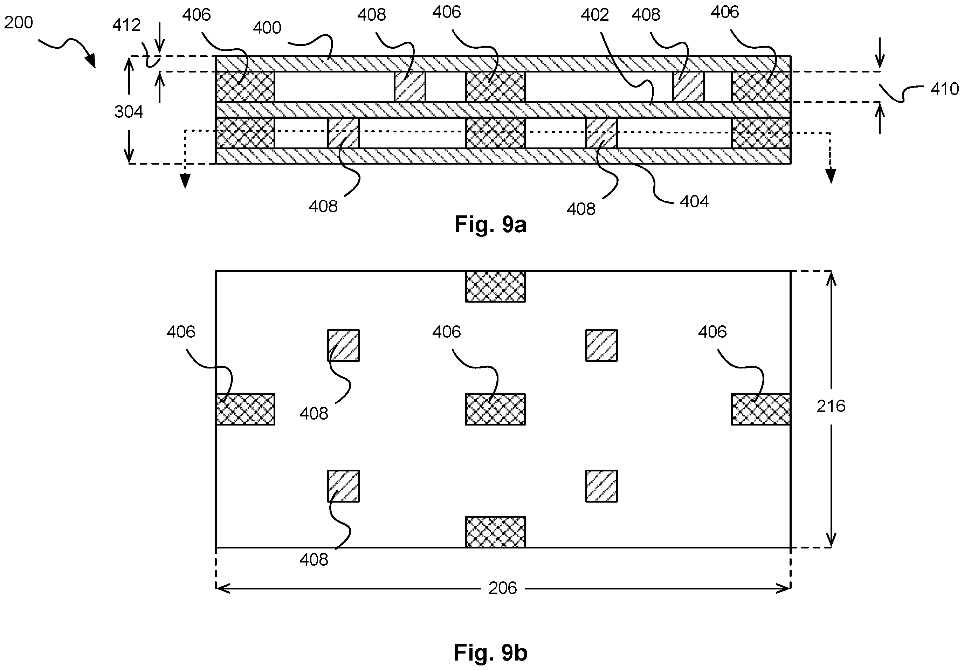

The individual construction of the first barrier plate 200 will now be discussed in more detail with respect to Figures 9a and 9b. Figures 9a and 9b respectively show a cross-sectional side view and a plan view of the first barrier plate 200 of the thermal barrier 100 according to an example.

In some examples, the first barrier plate 200 comprises a first barrier layer 400, a second barrier layer 402, and a third barrier layer 404 and at least one barrier spacer 406, 408 positioned between the first barrier layer 400, the second barrier layer 402, and the third barrier layer 404. The first barrier layer 400 is closer to the first battery cell 122, while the second barrier layer 402 is closer to the second battery cell 124. The barrier spacers 406, 408 serve to physically separate the first barrier layer 400 and the second barrier layer 402, ensuring that heat transfer between the two layers is minimised.

Whilst the arrangement as shown in Figure 9a shows a first barrier layer 400, a second barrier layer 402, and a third barrier layer 404, there can be any suitable number of barrier layers 400, 402, 404 which form the first barrier plate 200. The number of barrier layers 400, 402, 404 can be determined from the required thermal properties and the spacing between the first battery cell 122 and the second battery cell 124.

The first barrier layer 400 may be made from a high temperature resistance and low thermal conductive material, which can withstand high temperatures while minimising the transfer of heat between adjacent cells or subassemblies. Examples of suitable materials for the first barrier layer 400 include mica, aerogel, paper, silicon rubber, ceramic, fibreglass, phenolic resin, and polyimide.

The first barrier layer thickness 412 may be in the range of 0.1 mm to 0.2mm, providing sufficient insulation while maintaining a compact form factor. The second barrier layer 402 and the third barrier layer 404 may have the same thickness as the first barrier layer thickness 412.

The second barrier layer 402 and the third barrier layer 404 may also be made from a high temperature resistance and low thermal conductive material, similar to the first barrier layer 400. This ensures that the second barrier layer 402 and the third barrier layer 404 effectively prevents or limits the transfer of heat between the first battery cell 122 and the second battery cell 124. Examples of suitable materials for the second barrier layer 402 include mica, aerogel, paper, silicon rubber, ceramic, fibreglass, phenolic resin, and polyimide.

The barrier spacer 406, 408 is a component of the first barrier plate 200 that physically separates the first barrier layer 400, the second barrier layer 402 and the third barrier layer 404. The barrier spacer 406, 408 may comprise blocked barrier spacers 406, which are aligned with each other across the first barrier plate 200, and shifted barrier spacers 408, which are offset from each other across the first barrier plate 200. The alignment of the blocked barrier spacers 406 is shown in a direction parallel with the first thermal barrier axis 116 in Figure 9a. The offset alignment of the shifted barrier spacers 408 is shown in a direction parallel with the second thermal barrier axis 118 in Figures 9a and 9b.

The blocked barrier spacers 406 are aligned with each other across the first barrier plate 200 and therefore resist a pressure exerted from the first battery cell 122 and / or the second battery cell 124. In this way the blocked barrier spacers 406 increase the rigidity of the first barrier plate 200. At the same time, the shifted barrier spacers 408 are offset from each other, this means that the first, second and third barrier layers 400, 402, 404 are adequately separated, but the transmission of heat energy across the thermal barrier 100 is reduced.

In some examples blocked barrier spacers 406 and the shifted barrier spacers 408 comprise a barrier spacer thickness 410. The barrier spacer thickness 410 may be in the range of 0.5mm to 1mm which may provide adequate separation between the first and second barrier layers 400, 402 while maintaining a compact form factor.

In some examples, the second barrier plate 202 and the third barrier plate 204 have the same construction as the first barrier plate 200. This includes the presence of a first barrier layer 400, a second barrier layer 402, a third barrier layer 404, and one or more barrier spacers 406, 408 positioned between the first, second, and third barrier layers 400, 402, 404.

As shown in Figure 2, the first barrier plate 200 has a first barrier plate length 206 of 80mm, a first barrier plate width 216 of 80mm, and a first barrier plate thickness 304 of 2.2mm. The second barrier plate 202 has a second barrier plate length 208 of 40mm, a width that is the same as the first barrier plate width 216, and a thickness that is the same as the first barrier plate thickness 304. The third barrier plate 204 has a third barrier plate length 210 of 80mm, a width that is the same as the first barrier plate width 216, and a thickness that is the same as the first barrier plate thickness 304.

The use of multiple barrier plates 200, 202, 204 in the barrier plate assembly 128 provides enhanced thermal insulation and heat transfer capabilities, ensuring that the thermal barrier 100 effectively prevents or limits the transfer of heat between the first battery cell 122 and the second battery cell 124.

The thermal barrier 100 further comprises a deformable spacer assembly 108 which is configured to transmit a force exerted by the first battery cell 122 and/or the second battery cell 124 on the thermal barrier 100. This means that the deformable spacer assembly 108 is configured to compensate for the swelling of the first and second battery cells 122, 124 during normal operation and maintaining the integrity of the battery sub-assembly 120. The deformable spacer assembly 108 is configured to resist the pressure exerted on the thermal barrier 100. This further maintains the integrity of the first battery cell 122, and the second battery cell 124.

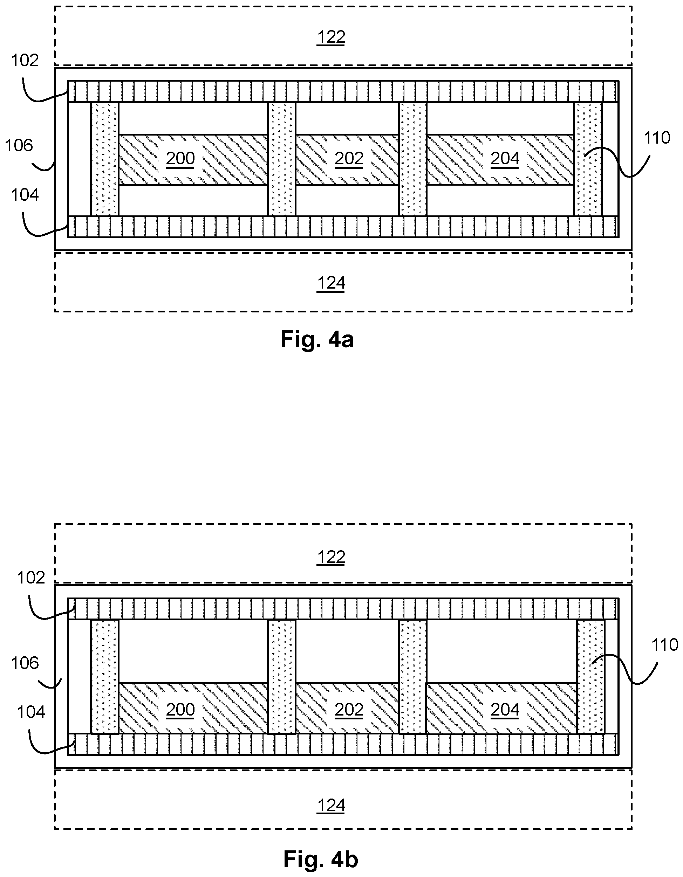

The deformable spacer assembly 108 will now be described with Figures 1 to 3 together with Figures 4a, 4b, 5a, 5b, 6, 7a-7e, and Figures 8a to 8i.

The deformable spacer assembly 108 comprises one or more deformable spacer elements 110. In some examples, the one or more deformable spacer elements 110 extend from a first side of the thermal barrier 100 adjacent to the first battery cell 122 to a second side of the thermal barrier 100 adjacent to the second battery cell 124. In some examples, the one or more deformable spacer elements 110 extend through the entire thermal barrier thickness 300 e.g., as shown in Figure 6. As shown in Figure 6, the deformable spacer assembly 108 is part of the first thermal barrier engaging surface 112 and the second thermal barrier engaging surface 114.

In some other examples, the one or more deformable spacer elements 110 extend partially through the thermal barrier thickness 300 e.g., as shown in Figure 3. In this example, the one or more deformable spacer elements 110 do not extend such that they form part of the first thermal barrier engaging surface 112 and the second thermal barrier engaging surface 114. However, the one or more deformable spacer elements 110 extend from a first side of the thermal barrier 100 e.g., a position closer to the first thermal barrier engaging surface 112 than the second thermal barrier engaging surface 114 to a second side of the thermal barrier 100 e.g., a position closer to the second thermal barrier engaging surface 114 than the first thermal barrier engaging surface 112.

In one example, the deformable spacer element 110 has a deformable spacer element width 218 of 5mm, a deformable spacer element length 224 of 5mm, and a deformable spacer element thickness 302 of 5mm. The dimensions of the deformable spacer elements 110 can be adjusted depending on the specific requirements of the battery module and the battery cells used.

Furthermore, the deformable spacer assembly 108 comprises a deformable spacer assembly length 220 of between 210mm and 250mm and a deformable spacer assembly width 222 of between 80mm to 100mm. The thickness of the deformable spacer assembly 108 is the same as the deformable spacer element thickness 302 e.g., 5mm.

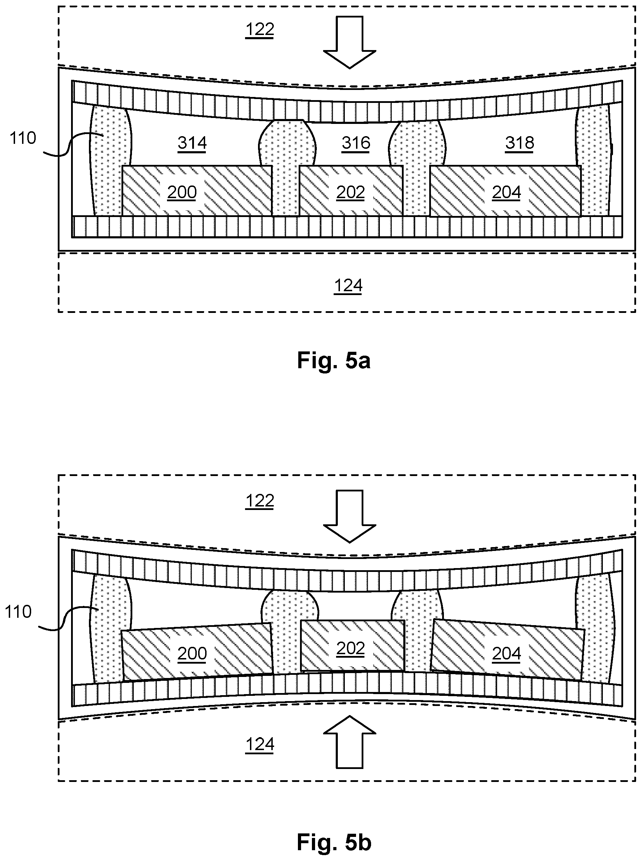

Figures 4a and 4b show cross-sectional views of the thermal barrier 100 according to an example. Figures 5a and 5b show a cross-sectional view of the thermal barrier 100 according to an example when the adjacent first and second battery cells 122, 124 have expanded. The deformable spacer assembly 108 is configured to deform when the first battery cell 122 and/or the second battery cell 124 exert a force on the thermal barrier 100. The deformable spacer assembly 108 is configured to return to its original shape once the first battery cell 122 and/or the second battery cell 124 do not exert a force on the thermal barrier 100. This may happen e.g., during a charging cycle of the first and / or second battery cells 122, 124.

Figure 6 shows a cross-sectional view of the thermal barrier 100 according to an example. The deformable spacer assembly 108 is configured to define one or more thermal barrier voids 314, 316, 318 within the thermal barrier 100. Figure 6 shows an example of the thermal barrier 100 where the packaging layer 106 and the contact layers 102, 104 are not provided.

Figures 4a, 4b, 5a, 6 show the barrier plate assembly 128 being mounted at different positions in the thermal barrier 100. This means that the barrier plate assembly 128 can be positioned in a plane which is at a distance along the first thermal barrier axis 116 closer to the first battery cell 122, or closer to the second battery cell 124 or equidistant from the first battery cell 122 and the second battery cell 124.

Figures 7a to 7e show cross-sectional views of a deformable spacer element 110 according to an example along the arrow as shown in Figure 6. The one or more deformable spacer elements 110 of the deformable spacer assembly 108 can have any suitable cross-sectional shape. For example, the cross-sectional shape of the deformable spacer element 110 can have a rectangular cross-sectional shape as shown in Figure 7a, a circular cross-sectional shape as shown in Figure 7d, a combined rectangular and circular cross-sectional shape as shown in Figure 7b, an oval cross-sectional shape as shown in Figure 7c, or a convex cross-sectional shape as shown in Figure 7e.

The deformable spacer element 110 is made from one or more of the following materials: silicon rubber, aerogel, rubber, polyurethane, thermoplastic elastomer, polyethylene foam, neoprene rubber, and or latex foam.

The deformable spacer assembly 108 is configured to manage the forces exerted by the first battery cell 122 and/or the second battery cell 124 on the thermal barrier 100. In one example, the deformable spacer assembly 108 comprises one or more deformable spacer elements 110, which are designed to transmit the force exerted by the first battery cell 122 and/or the second battery cell 124 on the thermal barrier 100. This means that the deformable spacer assembly 108 is able to compensate for the swelling of the first and / or second battery cell 122, 124 and protect the barrier plate assembly 128.

The choice of material for the deformable spacer elements 110 is to ensure that they can effectively manage the forces exerted by the first and / or second battery cells 122, 124 while maintaining their structural integrity and providing adequate thermal insulation. In some examples, the deformable spacer elements 110 may be made from one or more of the following materials: silicon rubber, aerogel, rubber, polyurethane, thermoplastic elastomer, polyethylene foam, neoprene rubber, and or latex foam.

These materials offer a combination of desirable properties, such as high temperature resistance, low thermal conductivity, and the ability to deform and return to their original shape when subjected to forces exerted by the first and / or second battery cells 122, 124.

The thermal conductivity of the deformable spacer elements 110 can be a factor in determining the overall thermal performance of the thermal barrier 100. In some examples, the deformable spacer elements 110 have a thermal conductivity of less than 0.1 W/mK. This low thermal conductivity helps to minimise the transfer of heat between the first battery cell 122 and the second battery cell 124, ensuring that the thermal barrier 100 effectively prevents or limits the transfer of heat between the adjacent battery cells.

The hardness of the deformable spacer elements 110 is another factor that influences their ability to manage the forces exerted by the first or second battery cells 122, 124 and maintain the structural integrity of the thermal barrier 100. In some examples, the deformable spacer elements 110 have a hardness range of 20 Shore A to 60 Shore A according to the standard ASTM D 2240. This hardness range allows the deformable spacer elements 110 to effectively deform when subjected to forces exerted by the first battery cell 122 and/or the second battery cell 124, while still providing sufficient structural support to the thermal barrier 100.

In some examples a portion of the deformable spacer assembly 108 may vary in hardness in a direction of the first thermal barrier axis 116 or the second thermal barrier axis 118. For example, an inner region or middle region of the deformable spacer assembly 108 may absorb greater volume expansions due to a swelling phenomenon of the first and second battery cells 122, 124 than the outer region. The stiffness of the deformable spacer assembly 108 near the edge may optionally be greater than the stiffness of the middle of the deformable spacer assembly 108.

In some examples, the pressure applied to the deformable spacer assembly 108 during charging of the first battery cell 122 and / or the second battery cell 124 can be up to 1 Megapascal (1MPa). During the discharge, the swelling decreases as well as the applied pressure to the deformable spacer assembly 108. In some examples the compression of at least one of the deformable spacer elements 110 of the deformable spacer assembly 108 may be 1.47mm.

The deformable spacer assembly 108 may also comprise additional optional features to further enhance its performance and functionality. For instance, the deformable spacer assembly 108 may include a deformable spacer central portion 306 as shown in Figure 3. The deformable spacer central portion 306 is configured to connect individual deformable spacer elements 110 together. This deformable spacer central portion 306 may have a deformable spacer central portion thickness 308 of about 0.5mm. In other examples, the deformable spacer central portion 306 is optional e.g., the arrangements as shown in Figures 4a, 4b, and 6 do not have a deformable spacer central portion 306.

Overall, the deformable spacer assembly 108 and its elements play a role in the thermal barrier 100 by managing the forces exerted by the battery cells, providing thermal insulation, and maintaining the structural integrity of the thermal barrier 100. The selection of appropriate materials, thermal conductivity, and hardness range for the deformable spacer elements 110 ensures that the thermal barrier 100 can effectively prevent or limit the transfer of heat between adjacent battery cells, thereby enhancing the performance and safety of the battery module.

In some examples, the deformable spacer assembly 108 optionally defines one or more thermal barrier voids 314, 316, 318. As shown in Figure 3, the thermal barrier 100 comprises a first thermal barrier void 314, a second thermal barrier void 316, and a third thermal barrier void 318. The presence of the first, second and third thermal barrier voids 314, 316, 318 means that the thermal barrier 100 can deform in a predictable way without damaging components such as the barrier plate assembly 128.

In one example, the deformable spacer assembly 108 is configured to define one or more thermal barrier voids 314, 316, 318 within the thermal barrier 100. These voids 314, 316, 318 can be strategically designed and positioned to accommodate the deformation of the deformable spacer elements 110 when a force is exerted by the first battery cell 122 and/or the second battery cell 124 on the thermal barrier 100.

In some examples, the one or more deformable spacer elements 110 are configured to deform into the one or more thermal barrier voids 314, 316, 318 within the thermal barrier 100 when a force is exerted by the first battery cell 122 and/or the second battery cell 124 on the thermal barrier 100. This deformation allows the thermal barrier 100 to effectively manage and mitigate the impact of forces exerted by the battery cells, ensuring the integrity and performance of the battery module. Figure 5a shows the exemplary deformation of the deformable spacer elements 110 when the first battery cell 122 swells. Figure 5b shows the exemplary deformation of the deformable spacer elements 110 when the first battery cell 122 and the second battery cell 124 swells.

The ability of the deformable spacer elements 110 to deform into the thermal barrier voids 314, 316, 318 provides several advantages. For instance, it allows the thermal barrier 100 to accommodate and compensate for the swelling of the first battery cell 122 and/or the second battery cell 124, which may occur due to various factors such as temperature changes, charging and discharging cycles, and ageing. This helps maintain the structural integrity and performance of the battery module over time.

Additionally, the deformation of the deformable spacer elements 110 into the thermal barrier voids 314, 316, 318 ensures that the force exerted on the barrier plate assembly 128 by the first battery cell 122 and/or the second battery cell 124 is below a threshold force. This helps prevent damage to the barrier plate assembly 128 and the battery cells, ensuring the longevity and reliability of the battery module. Instead, the force exerted by the first and second battery cells 122, 124 on the thermal barrier 100 is transmitted through the deformable spacer assembly 108.

In some examples, the thermal barrier voids 314, 316, 318 defined by the deformable spacer assembly 108 may be filled or empty. Various materials can be used to fill the thermal barrier voids 314, 316, 318, depending on the desired properties and performance of the thermal barrier 100.

For instance, air can be used as a filling material for the thermal barrier voids 314, 316, 318. Air is a readily available and cost-effective option that provides a certain degree of thermal insulation due to its low thermal conductivity.

Alternatively, other materials such as foam can be used to fill the thermal barrier voids 314, 316, 318. Foam materials can provide improved thermal insulation compared to air, as they typically have lower thermal conductivity values.

The choice of filling material for the thermal barrier voids 314, 316, 318 may depend on various factors, including the desired thermal insulation properties, cost considerations, and specific application requirements. By selecting an appropriate filling material, the thermal barrier 100 can be tailored to provide optimal performance and efficiency in a wide range of battery module applications.

In other examples, there may be no thermal barrier voids 314, 316, 318. Instead, the deformation of the deformable spacer assembly 108 is sufficient.

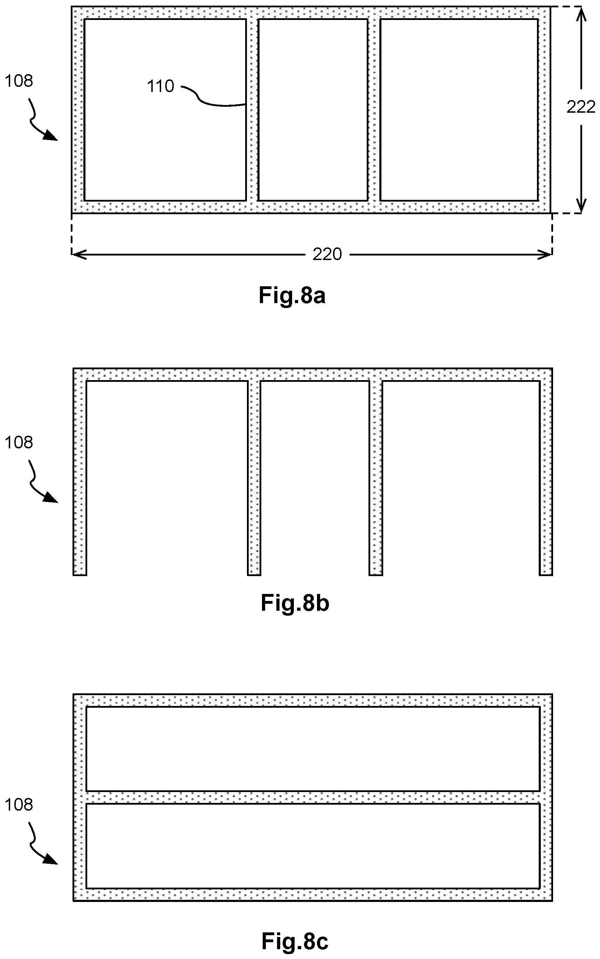

Figures 8a to 8i show cross-sectional views of part of the thermal barrier 100 according to various examples. The cross-sectional views of the thermal barrier 100 in Figures 8a to 8i only show the deformable spacer assembly 108 for the purposes of clarity. The cross-sectional views of the thermal barrier 100 as shown in Figures 8a to 8i are in a direction along the second thermal barrier axis 118 (e.g., similar to Figure 2).

Figures 8a to 8i are the same as the arrangement described with reference to Figures 1 to 3 except that the arrangement, size, placement, and orientation of the deformable spacer assembly 108 is modified. The functionality of the deformable spacer assembly 108 is the same as previously described. However, the deformable spacer assembly 108 can take different shapes for example, to accommodate different shapes, sizes and orientations of the barrier plate assembly 128 (not shown in Figures 8a, to 8i for the purposes of clarity).

In some examples, the deformable spacer assembly 108 comprises a symmetrical arrangement about the first thermal barrier axis 116 and / or the second thermal barrier axis 118. In some other examples, the axis of symmetry of the deformable spacer assembly 108 can be about another axis other than the first thermal barrier axis 116 and / or the second thermal barrier axis 118. In some other examples, which are not shown, the deformable spacer assembly 108 comprises an asymmetric arrangement of deformable spacer elements 110.

Figure 8a shows an arrangement which is similar to that shown in Figures 2 and 3. Figure 8b is the same as shown in Figure 8a except that a lower side of the deformable spacer assembly 108 does not comprise a deformable spacer element 110.

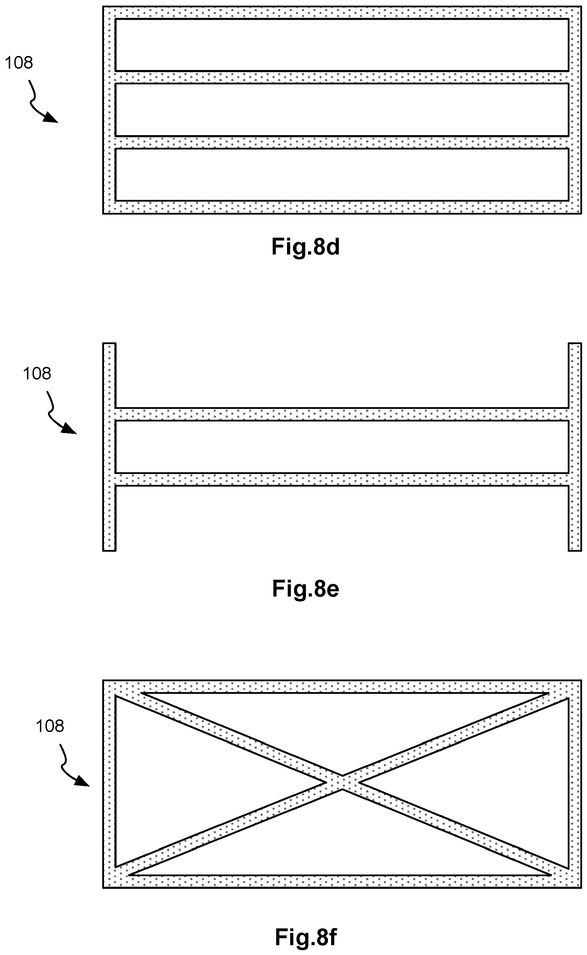

Figure 8c shows an arrangement of the deformable spacer assembly 108 wherein the intermediate deformable spacer element 110 extends in a direction perpendicular to those shown in Figure 8a. Figure 8d is the same as shown in Figure 8c except that there are more intermediate deformable spacer elements 110. Figure 8e is the same as shown in Figure 8d except that a lower side and an upper side of the deformable spacer assembly 108 does not comprise a deformable spacer element 110. Figure 8f shows an arrangement whereby the intermediate deformable spacer elements 110 extend from diagonally opposite corners. Figure 8g is the same as Figure 8f except that a left side and a right side of the deformable spacer assembly 108 does not comprise a deformable spacer element 110. Figure 8h is the same as Figure 8f except that a lower side and an upper side of the deformable spacer assembly 108 does not comprise a deformable spacer element 110. Figure 8i is the same as Figure 8f except that a left side, a right side, a lower side and an upper side of the deformable spacer assembly 108 does not comprise a deformable spacer element 110. Figure 8i also shows the barrier plate assembly 128 for reference.

In some examples, the barrier plate assembly 128 may comprise different numbers or arrangements of barrier plates 200, 202, 204. For instance, the barrier plate assembly 128 may comprise only one barrier plate 200 or more than three barrier plates 200, 202, 204, depending on the specific requirements of the battery module and the desired level of thermal insulation between adjacent battery cells.

Additionally, the deformable spacer assembly 108 may comprise various configurations of deformable spacer elements 110. In some examples, the deformable spacer elements 110 may be arranged in different patterns or orientations to optimise the force distribution and deformation characteristics of the thermal barrier 100. The deformable spacer elements 110 may also have different shapes, sizes, or thicknesses to accommodate different battery cell geometries and expansion characteristics.

In some examples, the thermal barrier 100 may comprise additional or alternatively components or layers, such as intermediate layers 500 made from high temperature resistance and high thermal conductive materials or high temperature resistance and low thermal conductive materials. These intermediate layers 500 may be mounted between the deformable spacer assembly 108 and the barrier plate assembly 128, providing additional thermal insulation or heat transfer capabilities, depending on the specific requirements of the battery module.

In some examples, the deformable space assembly 108 comprises one or more deformable spacer elements 110 which are each unitary elements which extend across the thermal barrier thickness 300 e.g., as shown in Figures 3 or 6. However, in some examples one or more deformable spacer elements 110 can be a plurality of individual spacer parts which are aligned together across the thermal barrier thickness 300 along an axis parallel with the first thermal barrier axis 116. Such an example is shown in e.g., Figures 10a to 10i. In this way, the individual spacer parts form the deformable spacer elements 110 which extend across the thermal barrier thickness 300 and transmit force between the first thermal barrier engaging surface 112 and the second thermal barrier engaging surface 114.

Figures 10a to 10i show cross-sectional views of the thermal barrier 100 according to such alternative examples. The thermal barrier 100 is still positioned between the first battery cell 122 and the second battery cell 124 and is configured to prevent or limit the transfer of heat between the first battery cell 122 and the second battery cell 124.

In the arrangement as shown in Figure 10a the barrier plate assembly 128 has been modified. Optionally an intermediate layer 500 is mounted within the thermal barrier 100. In this case, the deformable spacer assembly 108 is mounted either side of the intermediate layer 500.

Figure 10b shows an arrangement identical to Figure 10a except that the contract layers 102, 104 and the packaging layer 106 have been omitted. In the arrangement as shown in Figure 10b, the deformable spacer assembly 108 is configured to perform the functions of the contact layers 102, 104 and the packaging layer 106. Figure 10c is the same as shown in Figure 10b except that an additional intermediate layer 500 is provided. The arrangement as shown in Figure 10c can optionally comprise the contact layers 102, 104 and the packaging layer 106.

Figure 10d shows an arrangement that is the same as shown in Figure 10a except that a rigid spacer element 502 is mounted adjacent to the one or more deformable spacer elements 110 and the intermediate layer 500. The rigid spacer element 502 is configured no to deform when the first or second battery cell 122, 124 exerts a force on the thermal barrier 100 and provide structural support and prevent the intermediate layer 500 touching another layer.

Figure 10e shows an arrangement identical to Figure 10d except that the contract layers 102, 104 and the packaging layer 106 have been omitted. In the arrangement as shown in Figure 10e, the deformable spacer assembly 108 is configured to perform the functions of the contact layers 102, 104 and the packaging layer 106.

Figure 10f is the same as shown in Figure 10e except that an additional intermediate layer 500 is provided. The arrangement as shown in Figure 10f can optionally comprise the contact layers 102, 104 and the packaging layer 106.

Figure 10g shows an arrangement which is the same as shown in Figure 10d except that the rigid spacer element 502 is mounted between the intermediate layer 500 and the one or more deformable spacer elements 110.

Figure 10h shows an arrangement identical to Figure 10g except that the contract layers 102, 104 and the packaging layer 106 have been omitted. In the arrangement as shown in Figure 10h, the deformable spacer assembly 108 is configured to perform the functions of the contact layers 102, 104 and the packaging layer 106.

Figure 10i is the same as shown in Figure 10h except that an additional intermediate layer 500 is provided. The arrangement as shown in Figure 10i can optionally comprise the contact layers 102, 104 and the packaging layer 106.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealised or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A thermal barrier (100) for use in a battery module, the thermal barrier (100) comprising:
a barrier plate assembly (128) configured to be positioned between a first battery cell (122) and a second battery cell (124), the barrier plate assembly (128) comprising one or more barrier plates (200, 202, 204) configured to prevent or limit the transfer of heat between the first battery cell (122) and the second battery cell (124); and
a deformable spacer assembly (108) comprising one or more deformable spacer elements (110) extending from a first side of the thermal barrier (100) adjacent to the first battery cell (122) to a second side of the thermal barrier (100) adjacent to the second battery cell (124), wherein a force exerted by the first battery cell (122) and/or the second battery cell (124) on the thermal barrier (100) is configured to be transmitted through the deformable spacer assembly (108).

2. The thermal barrier (100) according to claim 1, wherein the one or more deformable spacer elements (110) are configured to deform when the first battery cell (122) and/or the second battery cell (124) exert a force on the thermal barrier (100).

3. The thermal barrier (100) according to claim 1 or 2, wherein the deformable spacer assembly (108) is configured to return to its original shape once the first battery cell (122) and/or the second battery cell (124) do not exert a force on the thermal barrier (100).

4. The thermal barrier (100) according to any one of claims 1 to 3, wherein the one or more deformable spacer elements (110) are configured to deform into the one or more thermal barrier voids (314, 316, 318) within the thermal barrier (100) when a force is exerted by the first battery cell (122) and/or the second battery cell (124) on the thermal barrier (100).

5. The thermal barrier (100) according to claim 4, wherein the deformable spacer assembly (108) is configured to define one or more thermal barrier voids (314, 316, 318) within the thermal barrier (100).

6. The thermal barrier (100) according to any one of claims 1 to 5 wherein the one or more deformable spacer elements (110) are made from one or more of the following materials: silicon rubber, aerogel, rubber, polyurethane, thermoplastic elastomer, polyethylene foam, neoprene rubber, and or latex foam.

7. The thermal barrier (100) according to any one of claims 1 to 6 wherein the one or more deformable spacer elements (110) has a thermal conductivity of less than 0.1 W/mK.

8. The thermal barrier (100) according to any one of claims 1 to 7, wherein the barrier plate assembly (128) comprises a first barrier plate (200), a second barrier plate (202), and a third barrier plate (204).

9. The thermal barrier (100) according to claim 8, wherein each of the first barrier plate (200), the second barrier plate (202), and the third barrier plate (204) comprises a first barrier layer (400), a second barrier layer (402), and a barrier spacer (406, 408) positioned between the first barrier layer (400) and the second barrier layer (402).

10. The thermal barrier (100) according to claim 9, wherein the first barrier layer (400) and the second barrier layer (402) are made from one or more of the following materials: mica, aerogel, paper, silicon rubber, ceramic, fibreglass, phenolic resin, and or polyimide.

11. The thermal barrier (100) according to any one of claims 1 to 10, further comprising a first contact layer (102) adjacent to the first battery cell (122) and a second contact layer (104) adjacent to the second battery cell (124).

12. The thermal barrier (100) according to claim 11, wherein the first contact layer (102) and the second contact layer (104) are made from one or more of the following materials: mica, aerogel, paper, silicon rubber, ceramic, fibreglass, phenolic resin, polyimide, aluminium, copper, graphite, carbon nanotubes, graphene, and or gold.

13. The thermal barrier (100) according to any one of claims 1 to 12, further comprising a packaging layer (106) surrounding the thermal barrier (100), the packaging layer (106) being made from an electrically insulating material.

14. The thermal barrier (100) according to any one of claims 1 to 13 wherein the one or more deformable spacer elements (110) have a hardness range of 20 Shore A to 60 Shore A according to the standard ASTM D 2240.

15. A battery sub-assembly (120) comprising:
a first battery cell (122);
a second battery cell (124); and
a thermal barrier (100) according to any one of claims 1 to 14, positioned between the first battery cell (122) and the second battery cell (124).

16. A battery module comprising a plurality of battery sub-assemblies (120) according to claim 15.
